# FASCICULE DE BREVET EUROPEEN

(11) **EP 1 721 093 B1**
(45) Date de publication et mention de la délivrance du brevet: **02.10.2013**
(21) Numéro de dépôt: 05717725.5
(22) Date de dépôt: 25.02.2005
(51) Int. Cl.: F16H 61/02

(54) **PROCEDE DE CORRECTION DES RAPPORTS D UNE TRANSMISSION AUTOMA TIQUE**
VERFAHREN ZUM EINSTELLEN EINES AUTOMATISCHEN GETRIEBES VERHÄLTNIS.
METHOD FOR ADJUSTING AN AUTOMATIC TRANSMISSION RATIO

(30) Priorité: 27.02.2004 FR 0450367
(43) Date de publication de la demande: 15.11.2006
(73) Titulaire: Renault SAS, 92100 Boulogne Billancourt (FR)
(72) Inventeur: POISSON, Carine, 91310 MONTLHERY (FR); TAFFIN, Christian, 78320 LE MESNIL SAINT DENIS (FR)
(74) Mandataire: Rougemont, Bernard
(86) Numéro de dépôt international: PCT/FR2005/050127
(87) Numéro de publication internationale: WO 2005/085682

(56) Documents cités:
- EP-A- 1 122 467
- WO-A-02/097308
- US-A- 5 819 585
- US-A- 6 085 139

## Description

La présente invention concerne le contrôle des transmissions automatiques à rapports discrets ou continus. Elle s'applique à tout type de transmission automatique ou automatisée à rapports discrets ou continûment variable.

Lorsque ces transmissions disposent d'un mode de pilotage automatique, et d'un mode de commande manuel, l'invention ne concerne que le mode automatique. Elle a pour objet la gestion des interventions du conducteur en mode automatique, et constitue à ce titre un procédé de correction des rapports d'une transmission automatique, distinct des possibilités d'un véritable abandon du mode automatique par le conducteur, lorsqu'il souhaite prendre complètement en charge la commande des passages de vitesses, comme dans une boîte de vitesse manuelle.

Lorsqu'un véhicule équipé d'une transmission automatique présente deux palettes de commande de boîte sur, ou à proximité du volant, le conducteur peut en principe utiliser ces palettes (à la place d'un levier de commande conventionnel), pour commander des passages de vitesses montants ou descendants dans un mode dit de « commande manuelle impulsionnelle ».

Selon la disposition habituelle en la matière, le conducteur doit prendre dans un premier temps l'option d'abandonner le mode automatique en positionnant un levier ou bouton dans la position correspondante. Il peut alors commander des passages montants et rétro, par appuis successifs sur la palette (+) et sur la palette (-). Dans ces conditions, si le conducteur a choisi d'abandonner le mode automatique pour le mode manuel, il a pris le contrôle des changements de rapport, jusqu'à un retour volontaire de sa part en mode automatique, qu'il effectue en replaçant le levier ou le bouton dans la position correspondante.

Avec ce principe de commande connu, si le conducteur oublie de repasser en mode automatique après avoir souhaité momentanément prendre le contrôle des changements de rapports, il reste malgré lui en mode manuel.

L'invention propose un mode de fonctionnement différent, selon lequel les changements de rapport demandés par le conducteur sont imposés à la transmission si des premières conditions sont remplies. Un rapport ainsi corrigé est maintenu tant que des secondes conditions de retour en mode automatique ne sont pas remplies, et le mode automatique est restauré automatiquement dès que les secondes conditions sont remplies.

Grâce à ces mesures, une correction, ou « forçage » de passage montant ou descendant, peut être imposée directement à la transmission lorsque les conditions requises sont réunies, sans abandonner réellement le mode automatique, puisque ce dernier est restauré automatiquement, dès que les circonstances le permettent.

De préférence, les corrections demandées par le conducteur seront prioritaires par rapport à des fonctions complémentaires, telles que le blocage de rapport en relevé de pied , ou le rétrogradage au freinage.

Selon un mode de réalisation particulier de l'invention, les moyens d'action sont des palettes disposées à proximité du volant, ou sur le volant.

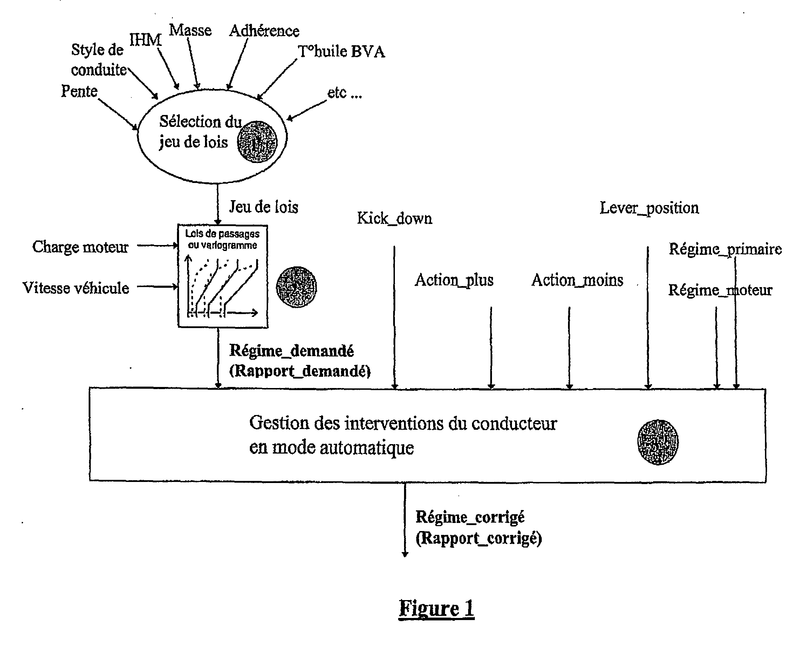

La présente invention sera mieux comprise à la lecture suivante de la description d'un mode de réalisation non limitatif de celle-ci, en se reportant au dessin annexé, sur lequel la figure 1 illustre le procédé proposé par l'invention.

La figure 1 résume de façon simplifiée le procédé de commande proposé, permettant de prendre en compte et de traiter les interventions du conducteur en mode automatique pour demander un rapport supérieur ou un rapport inférieur.

Le bloc 1 détermine le type de jeu de lois de passage (pour les transmissions à rapports discrets) ou le type de variogramme (pour les transmissions à rapports continus) en fonction d'un certain nombre d'informations représentatives de l'environnement, du groupe motopropulseur, du conducteur, et de ses actions de conduite.

Dans ce bloc, la sélection d'un jeu de lois de passages, ou de variogrammes, s'effectue en fonction du style de conduite, de la pente de la route, de l'adhérence de la chaussée, ou encore des demandes conducteur exprimées au travers de boutons (neige, sport, ...), ou aussi en fonction de caractéristiques de fonctionnement du GMP, comme la température d'huile de transmission.

Lorsque plusieurs jeux de lois de passage (ou variogrammes dans le cas des transmissions continûment variables) sont associés à la détermination du style de conduite, le bloc 1 peut par exemple effectuer son choix en appliquant une méthode décrite dans la publication FR 2 741 931, qui répresente l'état de la technique le plus prôche.

De même, lorsque plusieurs jeux de lois de passage (ou variogrammes dans le cas des transmissions continûment variables) sont associés à la détermination de la pente de la route (montée et descente), la pente de la route peut aussi être déterminée et prise en compte dans le bloc 1, selon l'enseignement de la publication FR 2 737 761.

Dans le cas où un ou plusieurs jeux de lois de passage (ou variogrammes dans le cas des transmissions continûment variables) sont associés à la détermination de l'adhérence de la route, celle-ci peut également être prise en compte dans le bloc 1, selon une méthode connue comme celle de la publication FR 2 772 865.

Enfin, comme indiqué sur la figure 1, le bloc 1 peut aussi prendre en considération la température de l'huile, dans le cas où un ou plusieurs jeux de lois de passage (ou variogrammes dans le cas des transmissions continûment variables) sont associés à la protection du groupe motopropulseur (moteur ou boîte de vitesses), par exemple en fonction de la température de l'huile du moteur.

Dans ces conditions, un jeu de lois de passage (ou variogrammes dans le cas des transmissions continûment variables) est sélectionné dans le bloc 1, pour satisfaire au mieux le souhait du conducteur, compte tenu de la situation de conduite.

Le bloc 2 correspond à un module de détermination du rapport de la transmission en fonction de la vitesse du véhicule et de la charge du moteur (la charge du moteur pouvant être, selon les configurations, la pédale d'accélérateur, une grandeur représentative de la demande du conducteur exprimée en puissance ou couple, ou encore le degré d'ouverture de l'organe de régulation de l'admission du combustible au moteur). Dans ce bloc, des courbes de fonctionnement classiques permettent de déterminer la consigne de rapport demandée qui devrait être appliquée à la transmission.

Conformément à l'invention, cette consigne de rapport peut être corrigée pour tenir compte des interventions du conducteur pour demander un passage montant « Action_Plus » ou un passage descendant « Action_Moins ».

Enfin, le bloc 3 a pour objet de proposer une correction du rapport qui a été déterminée par le bloc 2 en prenant en compte les interventions éventuelles du conducteur, « Action_Plus » (demande de passage montant) ou « Action_moins » (demande de passage descendant), ainsi que d'autres informations nécessaires pour gérer la correction de rapport de façon efficace. Conformément à l'invention, les informations prises en compte dans le bloc 3 sont de façon non limitative :
- « Action_Plus » (demande de passage montant par le conducteur),
- « Action_Moins » (demande de rétro par le conducteur),
- la charge moteur,
- le régime primaire,
- le régime moteur,
- l'information kick_down,
- l'information position levier de vitesse.

Conformément à l'invention, lorsqu'une demande de passage montant est faite par le conducteur, cette demande est traitée comme suit. Si les conditions d'activation ci-dessous sont réunies :
- Action_plus = 1, et
- Régime_primaire > Seuil (on n'est pas en sous-régime), et
- Lever_position = Drive (on n'est pas en Neutre, Park, ou marche arrière), et
- Kick_down = 0 (le conducteur ne de mande pas de kick), et
- Rapport_demandé < Rapport maximum autorisé par la transmission, alors un passage montant est imposé : Rapport_corrigé = Rapport_demandé + 1.

Les conditions de retour en mode automatique à la suite du passage montant qui vient d'être effectué sont alors :
- Action_moins = 1 (demande de rétrogradage), ou
- Régime_primaire < seuil (on est en sous-régime), ou
- Régime_moteur > seuil (on est en sur-régime), ou
- Lever_position # drive (on est soit en Neutre, ou Park, ou marche arrière), ou
- Kick_down = 1 (le conducteur demande un kick), ou
- Temporisation échue (pour rester en mode correction un temps minimum), ou
- Rapport_demandé = Rapport_corrigé (le mode automatique demande le même rapport que le conducteur)

De façon analogue, les demandes de passage descendant par le conducteur peuvent être traitées comme suit. Lorsque les conditions d'activation ci-dessous sont réunies :
- Action_moins = 1, et
- Régime_primaire < Seuil (pour ne pas faire un sur-régime), et
- Lever_position = Drive (on n'est pas en Neutre, Park, ou marche arrière) et
- Kick_down = 0 (le conducteur ne de mande pas de kick), et
- Rapport_demandé > Rapport minimum autorisé par la transmission, alors un passage rétro est imposé : Rapport_corrigé = Rapport_demandé - 1.

Les conditions de retour en mode automatique à la suite du passage descendant qui vient d'être effectué sont alors :
- Action_plus = 1 (demande de montant), ou
- Régime_primaire < seuil (on est en sous-régime), ou
- Régime_moteur > seuil (on est en sur-régime), ou
- Lever_position différent de Drive (on est soit en Neutre, ou Park, ou marche arrière), ou
- Kick_down = 1 (le conducteur demande un kick), ou
- Temporisation échue (pour rester en mode correction un temps minimum), ou
- Rapport_demandé = Rapport_corrigé (le mode automatique demande le même rapport que le conducteur)

Enfin, selon une autre caractéristique de l'invention, dans le cas où la transmission automatique dispose de fonctions complémentaires, telles que le « blocage de rapport en relevé de pied », le « rétrogradage au freinage », ou tout autre fonction de ce type, alors les corrections effectuées à la demande du conducteur dans les conditions indiquées ci-dessus seront de préférence prioritaires par rapport aux fonctions complémentaires.

Les avantages de l'invention sont nombreux. En comparaison au mode manuel dit de commande manuelle impulsionnelle, le « forçage » des passages qui est réalisé en mode automatique, permet de prendre en compte les demandes du conducteur (action + ou action -), tout en restant dans ce mode automatique.

Cette méthode permet une conduite bien plus confortable que le mode manuel impulsionnel classique, car le conducteur peut changer de rapport en mode automatique selon son souhait, et lorsqu'il n'intervient plus sur les décisions de rapport, alors on retrouve le mode automatique classique, et les changements de rapport de la transmission se font automatiquement.

## Revendications

1. Procédé de correction des rapports d'une transmission automatique en mode automatique à l'initiative du conducteur, **caractérisé en ce que** :
- le changement de rapport demandé par le conducteur est imposé à la transmission en priorité par rapport aux fonctions de blocage de rapport en relevé de pied ou de rétrogradage au freinage, si des premières conditions sont remplies,
- le rapport corrigé est maintenu tant que des conditions de retour en mode automatique incluant :
a) une demande de rétrogradage suite à un passage montant ou une demande de passage montant suite à un passage rétro imposé, faite par le conducteur, ou
b) Régime primaire < seuil, ou
c) Régime moteur > seuil, ou
d) levier en position Neutre, Park ou Marche Arrière, ou
e) le conducteur demande un kick, ou
f)Temporisation échue, ou
g) le mode automatique demande le même rapport que le conducteur,
ne sont pas remplies, et
- le mode automatique est restauré automatiquement dès que l'une de ces conditions de retour en mode automatique est remplie.

2. Procédé de correction selon la revendication 1, **caractérisé en ce que** le conducteur a la possibilité de demander un passage montant ou un passage rétro en sollicitant des moyens d'action séparés.

3. Procédé de correction selon la revendication 1 ou 2 **caractérisé en ce que** les conditions pour imposer à la transmission un passage montant sur demande du conducteur incluent :
- Régime_primaire > Seuil, et
- Levier en position Drive, et
- Kick pas demandé, et
- Rapport demandé < Rapport maximum autorisé par la transmission,

4. Procédé de correction selon la revendication 1, 2 ou 3, **caractérisé en ce que** les conditions pour imposer à la transmission un passage rétro sur demande du conducteur incluent :
- Régime_primaire < Seuil, et
- Levier en position Drive, et
- Kick pas demandé, et
- Rapport demandé > Rapport minimum autorisé par la transmission,

5. Procédé de correction selon l'une des revendications précédentes, **caractérisé en ce que** les informations prises en compte pour effectuer une correction incluent
- le rapport demandé par la transmission, et
- les demandes de passages montants et rétro par le conducteur,
- la charge moteur, et
- le régime primaire, et
- le régime moteur, et
- l'information kick_down, et
- l'information position levier de vitesse,

6. Dispositif de correction pour la mise en oeuvre d'un procédé selon l'une des revendications 2 à 5, **caractérisé en ce que** les moyens d'action sont des palettes disposées à proximité du volant.

7. Dispositif de correction pour la mise en oeuvre d'un procédé selon l'une des revendications 2 à 5, **caractérisé en ce que** les moyens d'action sont des palettes disposées sur le volant.

## Patentansprüche

1. Verfahren zum Einstellen der Gänge eines Automatikgetriebes im Automatikmodus auf Initiative des Lenkers, **dadurch gekennzeichnet, dass**:
- der vom Lenker geforderte Gangwechsel dem Getriebe prioritär zu den Funktionen der Gangfeststellung bei Fußanheben oder des Zurückschaltens beim Bremsen vorgegeben wird, wenn erste Bedingungen erfüllt sind,
- der eingestellte Gang beibehalten wird, solange die Bedingungen für die Rückkehr in den Automatikmodus, umfassend:
a) einen Zurückschaltbefehl nach einem Hochschalten oder einen Hochschaltbefehl nach einem vorgegebenen Zurückschalten, durchgeführt durch den Lenker,
oder
b) Primärdrehzahl < Schwelle, oder
c) Motordrehzahl > Schwelle, oder
d) Schalthebel in Neutral-, Park- oder Rückwärtsgangstellung, oder
e) der Lenker fordert einen Kickdown, oder
f) Verzögerung abgelaufen, oder
g) Automatikmodus fordert denselben Gang wie der Lenker,
nicht erfüllt sind, und
- der Automatikmodus automatisch wieder hergestellt wird, sobald eine dieser Bedingungen für die Rückkehr in den Automatikmodus erfüllt ist.

2. Einstellverfahren nach Anspruch 1, **dadurch gekennzeichnet, dass** der Lenker die Möglichkeit hat, ein Hochschalten oder ein Zurückschalten zu fordern, wobei er separate Betätigungsmittel betätigt.

3. Einstellverfahren nach Anspruch 1 oder 2, **dadurch gekennzeichnet, dass** die Bedingungen, um dem Getriebe ein Hochschalten auf Befehl des Lenkers vorzugeben, einschließen:
- Primärdrehzahl > Schwelle, und
- Hebel in Drive-Stellung, und
- Kickdown nicht gefordert, und
- geforderter Gang < maximal vom Getriebe zulässiger Gang.

4. Einstellverfahren nach Anspruch 1, 2 oder 3, **dadurch gekennzeichnet, dass** die Bedingungen, um dem Getriebe ein Zurückschalten auf Befehl des Lenkers vorzugeben, einschließen:
- Primärdrehzahl < Schwelle, und
- Hebel in Drive-Stellung, und
- Kickdown nicht gefordert, und
- geforderter Gang > minimal vom Getriebe zulässiger Gang.

5. Einstellverfahren nach einem der vorhergehenden Ansprüche, **dadurch gekennzeichnet, dass** die für die Durchführung einer Einstellung berücksichtigten Informationen einschließen:
- den vom Getriebe geforderten Gang, und
- die Hochschalt- und Zurückschaltbefehle durch den Lenker,
- die Motorlast, und
- die Primärdrehzahl, und
- die Motordrehzahl, und
- die Information kick_down, und
- die Information Stellung Geschwindigkeitshebel.

6. Einstellvorrichtung für den Einsatz eines Verfahrens nach einem der Ansprüche 2 bis 5, **dadurch gekennzeichnet, dass** die Betätigungsmittel in der Nähe des Lenkrades angeordnete Paletten sind.

7. Einstellvorrichtung für den Einsatz eines Verfahrens nach einem der Ansprüche 2 bis 5, **dadurch gekennzeichnet, dass** die Betätigungsmittel auf dem Lenkrad angeordnete Paletten sind.

## Claims

1. Method for adjusting automatic transmission ratios to automatic mode by the driver, **characterized in that**:
- the change of ratio requested by the driver is imposed on the transmission with priority over ratio blocking functions by lifting the foot, or down-shifting on braking if first conditions are satisfied,
- the adjusted ratio is maintained until conditions for returning to automatic mode are satisfied, including:
a) a downshift request following an upshift or an upshift request following an imposed downshift, made by the driver, or
b) primary speed < threshold, or
c) engine speed > threshold, or
d) lever in neutral, park or reverse position, or
e) the driver requests a kick, or
f) timer timed out, or
g) the automatic mode requests the same ratio as the driver.
- the automatic mode is automatically restored when one of these conditions for returning to automatic mode is satisfied.

2. Adjustment method according to Claim 1, **characterized in that** the driver has the facility to request an up-shift or a down-shift by the use of separate action means.

3. Adjustment method according to Claim 1 or 2, **characterized in that** the conditions for imposing an up-shift on the transmission when requested by the driver include:
- primary speed > threshold, and
- lever in position Drive, and
- kick not required, and
- required ratio < maximum ratio allowed by the transmission.

4. Adjustment method according to Claim 1, 2 or 3, **characterized in that** the conditions for imposing a down-shift on the transmission when requested by the driver include:
- primary speed < threshold, and
- lever in position Drive, and
- kick not required, and
- required ratio > minimum ratio allowed by the transmission.

5. Adjustment method according to one of the preceding claims, **characterized in that** the information taken into account to perform an adjustment includes:
- the ratio required by the transmission, and
- the up- and down-shift requests by the driver,
- the engine load, and
- the primary speed, and
- the engine speed, and
- the kick down information, and
- the gearshift lever position information.

6. Adjustment device for implementing a method according to one of Claims 2 to 5, **characterized in that** the action means are arms disposed near to the steering wheel.

7. Adjustment device for implementing a method according to one of Claims 2 to 5, **characterized in that** the action means are arms disposed on the steering wheel.
